(19) Europäisches Patentamt
European Patent Office
Office européen des brevets

(11) EP 3 862 072 A1

(12) EUROPEAN PATENT APPLICATION
published in accordance with Art. 153(4) EPC

(43) Date of publication:
**11.08.2021 Bulletin 2021/32**

(21) Application number: **19868648.7**

(22) Date of filing: **02.10.2019**

(51) Int Cl.:
***B01D 69/00*** (2006.01) ***B01D 53/22*** (2006.01)
***B01D 71/02*** (2006.01) ***B01D 71/06*** (2006.01)
***B01D 71/28*** (2006.01) ***B01D 71/40*** (2006.01)
***B01D 71/72*** (2006.01) ***B01D 71/82*** (2006.01)
***C01D 1/04*** (2006.01) ***C08K 3/18*** (2006.01)
***C08K 5/13*** (2006.01) ***C08L 33/02*** (2006.01)
***C08L 61/04*** (2006.01)

(86) International application number:
**PCT/JP2019/038864**

(87) International publication number:
**WO 2020/071411 (09.04.2020 Gazette 2020/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.10.2018 JP 2018189410**

(71) Applicant: **SUMITOMO CHEMICAL COMPANY LIMITED**
**Chuo-ku**
**Tokyo 104-8260 (JP)**

(72) Inventors:
- **MATSUOKA, Fumiaki**
**Osaka-shi, Osaka 554-8558 (JP)**
- **KAWARA, Kensuke**
**Osaka-shi, Osaka 554-8558 (JP)**

(74) Representative: **Winter, Brandl - Partnerschaft mbB**
**Alois-Steinecker-Straße 22**
**85354 Freising (DE)**

# (54) COMPOSITION USEFUL FOR PRODUCTION OF ACIDIC GAS SEPARATION MEMBRANE

(57) The present invention provides a composition comprising an organic compound having an acid dissociation constant in a 25°C aqueous solution of 5.0 to 15.0, a hydrophilic resin, and a basic compound, wherein a content of the organic compound is 30 to 1,000 parts by weight per 100 parts by weight of the hydrophilic resin.

EP 3 862 072 A1

**Description**

Technical Field

The present invention relates to a composition useful for production of an acid gas separation membrane.

Background Art

The development of techniques to selectively separate acidic gas such as carbon dioxide from gas to be treated has proceeded recently. As a means for separating acidic gas, for example, membrane separation method have been contemplated.

In order to more efficiently separate acidic gas using a membrane separation method, acidic gas separation membranes are required to have high acidic gas permeation performance in addition to acidic gas separation selectivity. In order to enhance the acidic gas permeation performance of such acidic gas separation membranes, Patent Literatures 1 and 2, for example, disclose that a gas separation membrane is caused to contain a basic compound that reacts with an acidic gas (e.g., cesium carbonate and cesium hydroxide).

Citation List

Patent Literature

Patent Literature 1 International Publication No. WO 2009/093666
Patent Literature 2 International Publication No. WO 2011/099587

Summary of Invention

Technical Problem

Improvements in the acidic gas permeation performance of acidic gas separation membranes continue to be demanded. The present invention has been made in view of such situations, and it is an object of the present invention to provide a composition enabling production of an acidic gas separation membrane having excellent acidic gas permeation performance.

Solution to Problem

The present invention that may achieve the above object is as follows.

[1] A composition comprising an organic compound having an acid dissociation constant in a 25°C aqueous solution of 5.0 to 15.0, a hydrophilic resin, and a basic compound, wherein a content of the organic compound is 30 to 1,000 parts by weight, preferably 50 to 200 parts by weight, per 100 parts by weight of the hydrophilic resin.

[2] The composition according to [1], wherein the acid dissociation constant in a 25°C aqueous solution of the organic compound is 6.0 to 13.0, even more preferably 6.0 to 12.0, particularly preferably 7.0 to 10.0.

[3] The composition according to [1] or [2], wherein the hydrophilic resin is a polymer including a constitutional unit represented by the formula (1):

[Formula 1]

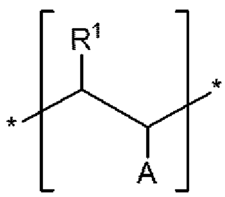

(1)

wherein A represents - $(CH_2)_n$-COOH, - $(CH_2)_n$-$SO_3H$, -X-$SO_3H$, or -OH, n represents an integer of 0 to 9, X represents a phenylene group, $R^1$ represents a hydrogen atom or a $C_{1-10}$ alkyl group, and * represents a bond position,

more preferably at least one selected from the group consisting of polyacrylic acid, a polyvinyl alcohol-polyacrylic acid copolymer, polyvinyl sulfonic acid, and polystyrene sulfonic acid, even more preferably a polyacrylic acid and/or polyvinyl alcohol-polyacrylic acid copolymer, particularly preferably polyacrylic acid.

[4] The composition according to any one of [1] to [3], wherein a viscosity of a 0.2% by weight aqueous solution of the hydrophilic resin is 300 to 70,000 mPa·s, more preferably 400 to 50,000 mPa·s, even more preferably 500 to 40,000 mPa·s.

[5] The composition according to any one of [1] to [4], wherein the basic compound is at least one selected from the group consisting of an alkali metal carbonate, an alkali metal hydrogen carbonate, an alkali metal hydroxide, and an amine compound, more preferably an alkali metal hydroxide, even more preferably at least one selected from the group consisting of potassium hydroxide, rubidium hydroxide, and cesium hydroxide, particularly preferably cesium hydroxide.

[6] The composition according to any one of [1] to [5], wherein a content of the basic compound is 10 to 3,000 parts by weight, more preferably 50 to 2,000 parts by weight, even more preferably 200 to 1,000 parts by weight, particularly preferably 300 to 500 parts by weight, per 100 parts by weight of the hydrophilic resin.

[7] The composition according to any one of [1] to [6], wherein the organic compound is at least one selected from the group consisting of a compound having a phenolic hydroxyl group, a polymer having a phenolic hydroxyl group, and a sulfonamide compound.

[8] The composition according to any one of [1] to [6], wherein the organic compound is a compound having a phenolic hydroxyl group and/or a polymer having a phenolic hydroxyl group.

[9] The composition according to [7], wherein the sulfonamide compound is at least one selected from the group consisting of methanesulfonamide, N-methylmethanesulfonamide, trifluoromethanesulfonamide, cyclopropanesulfonamide, pentafluoroethanesulfonamide, benzenesulfonamide, N-phenylmethanesulfonamide, 1,3-benzenedisulfonamide, 4-fluorobenzenesulfonamide, 3-fluorobenzenesulfonamide, and benzylsulfonamide, more preferably N-phenylmethanesulfonamide.

[10] The composition according to any one of [7] to [9], wherein the compound having a phenolic hydroxyl group is at least one selected from the group consisting of phenol, 3-nitrophenol, 3-chlorophenol, 4-fluorophenol, 4-iodophenol, 4-chlorophenol, 2,4-dichlorophenol, 3,5-dichlorophenol, 2,6-dichlorophenol, 3,4-dichlorophenol, 4,4-dihydroxydiphenyl ether, guaiacol, 2-bromophenol, 3-bromophenol, 4-bromophenol, 2-chlorophenol, 4-nitrophenol, 3-methoxyphenol, 5-methoxyresorcinol, 2,6-dimethoxyphenol, 2,6-dimethylphenol, 3,5-dimethylphenol, 3,5-dimethoxyphenol, 4-phenoxyphenol, 4-methoxyphenol, catechol, xylenol, pyrogallol, cresol, phloroglucinol, resorcinol, hydroquinone, 1,6-dihydroxynaphthalene, 2,7-dihydroxynaphthalene, 2,6-dihydroxynaphthalene, 1,4-dihydroxynaphthalene, 1,5-dihydroxynaphthalene, 1,7-dihydroxynaphthalene, 1,3-dihydroxynaphthalene, 2,3-dihydroxynaphthalene, 1,2-dihydroxynaphthalene, 1,2,4-trihydroxybenzene, hexahydroxybenzene, 1-naphthol, 2-naphthol, leucoquinizarine, 2-cyanophenol, 2-ethylphenol, 3',4'-dihydroxyacetophenone, 4'-hydroxyacetophenone, 4'-hydroxypropiophenone, 4'-dihydroxybutyrophenone, 2',4',6'-trihydroxyacetophenone, 4-hydroxybenzyl alcohol, 4-hexylphenol, 2-hydroxybenzenetrifluoride, 2-hydroxybenzenethiol, 2-isopropylphenol, 2-(methylthio)phenol, 4-amylphenol, salicylaldehyde, trimethylhydroquinone, 3-ethoxyphenol, 2-ethoxyphenol, tetrachlorohydroquinone, 4-bromoresorcinol, 4,6-diacetylresorcinol, 2',4',6'-trihydroxypropiophenone, methyl salicylate, 2,4'-dihydroxybenzophenone, 2',3',4'-trihydroxyacetophenone, 5-acetylsalicylamide, 4-hydroxymandelonitrile, 4-(chloroacetyl)catechol, benzyl 2,4-dihydroxyphenyl ketone, and 2,4,6-trihydroxy-2-phenylacetophenone, more preferably at least one selected from the group consisting of phenol, phloroglucinol, resorcinol, catechol, and pyrogallol, even more preferably at least one selected from the group consisting of phloroglucinol, resorcinol and pyrogallol, particularly preferably phloroglucinol and/or resorcinol.

[11] The composition according to any one of [7] to [10], wherein the polymer having a phenolic hydroxyl group is a novolac-type phenol resin and/or a resol-type phenol resin, more preferably a novolac-type phenol resin.

[12] The composition according to any one of [7] to [10], wherein a weight average molecular weight of the polymer having a phenolic hydroxyl group is 500 to 100,000, more preferably 600 to 50,000, even more preferably 700 to 20,000.

[13] The composition according to any one of [1] to [12], wherein the organic compound and the basic compound form a salt.

[14] The composition according to any one of [1] to [13], wherein the hydrophilic resin and the basic compound form a salt.

[15] The composition according to any one of [1] to [14] to be used for producing an acidic gas separation membrane.

[16] The composition according to [15], further comprising water.

[17] The composition according to [15], wherein a content of water is 20 to 99% by weight, more preferably 30 to 97% by weight, even more preferably 40 to 95% by weight, based on the entire composition.

[18] An acidic gas separation membrane comprising a membrane comprising the composition according to any one of [1] to [14] and a first porous membrane.

[19] The acidic gas separation membrane according to [18], wherein the composition further comprises water.

[20] The acidic gas separation membrane according to [18], wherein a content of water is 1 to 70% by weight, more preferably 5 to 60% by weight, even more preferably 10 to 50% by weight, based on the entire composition.

[21] The acidic gas separation membrane according to any one of [18] to [20], further comprising a second porous membrane.

[22] The acidic gas separation membrane according to [21], wherein a membrane comprising the composition is present between the first porous membrane and the second porous membrane.

[23] An acidic gas separation apparatus comprising the acidic gas separation membrane according to any one of [18] to [22].

[24] A method for producing an acidic gas separation membrane, the method comprising coating a first porous membrane with a coating liquid to form a membrane of the coating liquid and removing water from the obtained membrane of the coating liquid, wherein the coating liquid comprises an organic compound having an acid dissociation constant in a 25°C aqueous solution of 5.0 to 15.0, a hydrophilic resin, a basic compound, and water, and a content of the organic compound is 30 to 1,000 parts by weight, preferably 50 to 200 parts by weight, per 100 parts by weight of the hydrophilic resin.

Advantageous Effect of Invention

It is possible to produce an acidic gas separation membrane having excellent acidic gas permeation performance from the composition of the present invention.

Brief Description of Drawings

[Figure 1] Figure 1 is a cross-sectional view of an exemplary acidic gas separation membrane of the present invention.

[Figure 2] Figure 2 is a schematic view of an acidic gas separation apparatus used for performance evaluation of acidic gas separation membranes obtained in Examples and Comparative Examples.

Description of Embodiment

Hereinafter, the present invention will be sequentially described. The examples and preferred aspects described herein can be combined unless conflicting with each other.

The composition of the present invention includes an organic compound having an acid dissociation constant in a 25°C aqueous solution of 5.0 to 15.0, a hydrophilic resin, and a basic compound. When the organic compound has a plurality of functional groups (e.g., phenolic hydroxyl groups), and at least one of them has an acid dissociation constant in a 25°C aqueous solution of 5.0 to 15.0, the organic compound is classified into "organic compounds having an acid dissociation constant in a 25°C aqueous solution of 5.0 to 15.0" in the present invention. The composition of the present invention may include other components as required. Hereinafter, each of such components will be sequentially described.

(Organic compound having acid dissociation constant in 25°C aqueous solution of 5.0 to 15.0)

One feature of the present invention is to use an organic compound having an acid dissociation constant in a 25°C aqueous solution of 5.0 to 15.0 (in the present specification, may be abbreviated as a "weakly acidic organic compound"). Only one weakly acidic organic compound may be used, or two or more weakly acidic organic compounds may be used.

Use of the weakly acidic organic compound can improve the acidic gas permeation performance of an acidic gas separation membrane. The acid dissociation constant in a 25°C aqueous solution of the weakly acidic organic compound (when the weakly acidic organic compound has a plurality of functional groups, the acid dissociation constant of at least one functional group thereof) is preferably 6.0 to 13.0, even more preferably 6.0 to 12.0, particularly preferably 7.0 to 10.0. This acid dissociation constant is a value as measured by a known titration method based on the definition of Bronsted (Shinpan Bunseki Kagaku Jikken, Nihon Bunseki Kagakukai Hokkaido Shibu ed., pp.219 to 237).

Examples of the weakly acidic organic compound include compounds having a phenolic hydroxyl group, polymers having a phenolic hydroxyl group, alcohol compounds having a trifluoromethyl group, thiol compounds, carbonyl compounds having $\alpha$ hydrogen having high acidity, oxime compounds, hydroxamic acid compounds, imide compounds, and sulfonamide compounds. Only one weakly acidic organic compound may be used, or two or more weakly acidic organic compounds may be used.

As the weakly acidic organic compound, a compound having a phenolic hydroxyl group, a polymer having a phenolic hydroxyl group, and a sulfonamide compound are preferred, and a compound having a phenolic hydroxyl group and a polymer having a phenolic hydroxyl group are more preferred. Specific examples thereof will be described below. In the present invention, a "phenolic hydroxyl group" means a "hydroxyl group bonded to a carbon group of an aromatic ring". The aromatic ring is not limited to a benzene ring and may be, for example, a naphthalene ring or the like. In the present invention, the compound having a phenolic hydroxyl group means a weakly acidic organic compound having no repeating unit and having a phenolic hydroxyl group, and the polymer having a phenolic hydroxyl group means a weakly acidic organic compound having two or more repeating units and having a phenolic hydroxyl group. Therefore, in the present invention, the compound having a phenolic hydroxyl group and the polymer having a phenolic hydroxyl group are distinguished according to the presence or absence of repeating units. In the present invention, the polymer having a phenolic hydroxyl group also includes a dimer having a phenolic hydroxyl group.

Examples of the alcohol compound having a trifluoromethyl group include 2,2,2-trifluoroethanol and hexafluoroisopropanol. Examples of the thiol compound include thiophenol, 2-chlorobenzenethiol, 3-chlorobenzenethiol, and 4-methylthiophenol. Examples of the carbonyl compound having $\alpha$ hydrogen having high acidity include malonic esters and malononitrile. Examples of the oxime compound include acetophenoneoxime, acetamideoxime, acetaldoxime, and benzamidoxime. Examples of the hydroxamic acid compound include acetohydroxamic acid, benzohydroxamic acid, 4-chlorobenzohydroxamic acid, 4-nitrobenzohydroxamic acid, and 4-methoxybenzohydroxamic acid. Examples of the imide compound include succinimide, ethosuccimide, hexahydrophthalimide, phthalimide, 1,2,3,4-cyclobutanetetracarboxdiimide, 1,2,3,6-tetrahydrophthalimide, and 5-norbornene-2,3-dicarboximide.

Examples of the sulfonamide compound include methanesulfonamide, N-methylmethanesulfonamide, trifluoromethanesulfonamide, cyclopropanesulfonamide, pentafluoroethanesulfonamide, benzenesulfonamide, N-phenylmethanesulfonamide, 1,3-benzenedisulfonamide, 4-fluorobenzenesulfonamide, 3-fluorobenzenesulfonamide, and benzyl sulfonamide. Only one sulfonamide compound may be used, or two or more sulfonamide compounds may be used. The sulfonamide compound is preferably at least one selected from the group consisting of the specific examples mentioned above, more preferably N-phenylmethanesulfonamide.

Examples of the compound having a phenolic hydroxyl group include phenol, 3-nitrophenol, 3-chlorophenol, 4-fluorophenol, 4-iodophenol, 4-chlorophenol, 2,4-dichlorophenol, 3,5-dichlorophenol, 2,6-dichlorophenol, 3,4-dichlorophenol, 4,4-dihydroxydiphenyl ether, guaiacol, 2-bromophenol, 3-bromophenol, 4-bromophenol, 2-chlorophenol, 4-nitrophenol, 3-methoxyphenol, 5-methoxyresorcinol, 2,6-dimethoxyphenol, 2,6-dimethylphenol, 3,5-dimethylphenol, 3,5-dimethoxyphenol, 4-phenoxyphenol, 4-methoxyphenol, catechol, xylenol, pyrogallol, cresol, phloroglucinol, resorcinol, hydroquinone, 1,6-dihydroxynaphthalene, 2,7-dihydroxynaphthalene, 2,6-dihydroxynaphthalene, 1,4-dihydroxynaphthalene, 1,5-dihydroxynaphthalene, 1,7-dihydroxynaphthalene, 1,3-dihydroxynaphthalene, 2,3-dihydroxynaphthalene, 1,2-dihydroxynaphthalene, 1,2,4-trihydroxybenzene, hexahydroxybenzene, 1-naphthol, 2-naphthol, leucoquinizarine, 2-cyanophenol, 2-ethylphenol, 3',4'-dihydroxyacetophenone, 4'-hydroxyacetophenone, 4'-hydroxypropiophenone, 4'-dihydroxybutyrophenone, 2',4',6'-trihydroxyacetophenone, 4-hydroxybenzyl alcohol, 4-hexylphenol, 2-hydroxybenzenetrifluoride, 2-hydroxybenzenethiol, 2-isopropylphenol, 2-(methylthio)phenol, 4-amylphenol, salicylaldehyde, trimethylhydroquinone, 3-ethoxyphenol, 2-ethoxyphenol, tetrachlorohydroquinone, 4-bromoresorcinol, 4,6-diacetylresorcinol, 2',4',6'-trihydroxypropiophenone, methyl salicylate, 2,4'-dihydroxybenzophenone, 2',3',4'-trihydroxyacetophenone, 5-acetylsalicylamide, 4-hydroxymandelonitrile, 4-(chloroacetyl)catechol, benzyl 2,4-dihydroxyphenyl ketone, and 2,4,6-trihydroxy-2-phenylacetophenone. Only one compound having a phenolic hydroxyl group may be used, or two or more compounds having a phenolic hydroxyl group may be used.

The compound having a phenolic hydroxyl group is preferably at least one selected from the group consisting of the specific examples mentioned above, more preferably at least one selected from the group consisting of phenol, phloroglucinol, resorcinol, catechol, and pyrogallol, even more preferably at least one selected from the group consisting of phloroglucinol, resorcinol, and pyrogallol, particularly preferably phloroglucinol and/or resorcinol.

The polymer having a phenolic hydroxyl group that may be used in the present invention may be either of a polymer in which the phenolic hydroxyl group is bonded to the main chain or a polymer in which the phenolic hydroxyl group is bonded to the side chain. Examples of the polymer having a phenolic hydroxyl group include polyhydroxystyrene, polyvinylphenol, polyvinylbromophenol, novolac-type phenol resins, and resol-type phenol resins. Only one polymer having a phenolic hydroxyl group may be used, or two or more polymers having a phenolic hydroxyl group may be used.

The polymer having a phenolic hydroxyl group is preferably a novolac-type phenol resin and/or a resol-type phenol resin, more preferably a novolac-type phenol resin. Here, the novolac-type phenol resin means a phenol resin obtained by reacting a phenol with an aldehyde in the presence of an acid catalyst, and the resol-type phenol resin means a phenol resin obtained by reacting a phenols with an aldehydes in the presence of a base catalyst.

Examples of the phenols include phenol; alkylphenols having 1 to 4 $C_{1-10}$ alkyl groups as substituents, such as cresol, xylenol, ethylphenol, phloroglucinol, propylphenol, and butylphenol; polyphenols such as hydroquinone, resorcinol, and catechol; bisphenols such as bisphenol A, bisphenol F, and bisphenol S; trisphenols such as 2,4-bis(4-hydroxybenzyl)-6-methylphenol; naphthols such as $\alpha$-naphthol and $\beta$-naphthol; and high molecular weight phenols such

as lignin and lignin hydrolysates. Only one phenols may be used, or two or more phenols may be used. As the phenols, resorcinol and phenol are preferred.

In the present specification, "$C_{x-y}$" means that the carbon number is not less than x and not more than y (x and y each represent an integer).

In the present specification, a $C_{1-10}$ alkyl group may be either linear or branched chain. Examples of the $C_{1-10}$ alkyl group include a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a hexyl group, a heptyl group, an octyl group, a nonyl group, and a decyl group.

Examples of the aldehydes include formaldehyde, paraformaldehyde, acetaldehyde, benzaldehyde, o-hydroxybenzaldehyde, m-hydroxybenzaldehyde, p-hydroxybenzaldehyde, glyoxal, glutaraldehyde, terephthalaldehyde, and isophthaldialdehyde. Only one aldehydes may be used, or two or more aldehydes may be used. In production of the novolac-type phenol resin or the resol-type phenol resin, the amount of the aldehydes used is preferably 0.4 to 2.0 mol, more preferably 0.5 to 1.0 mol, per mol of the phenols.

Examples of the acid catalyst include hydrochloric acid, sulfuric acid, phosphoric acid, oxalic acid, monochloroacetic acid, p-toluenesulfonic acid, benzenesulfonic acid, β-naphthalenesulfonic acid, and phenolsulfonic acid. Only one acid catalyst may be used, or two or more acid catalysts may be used.

Examples of the base catalyst include magnesium hydroxide, calcium hydroxide, barium hydroxide, sodium hydroxide, potassium hydroxide, ammonium hydroxide, and hexamethylenetetramine. Only one base catalyst may be used, or two or more base catalysts may be used.

The weight average molecular weight of the polymer having a phenolic hydroxyl group is preferably 500 to 100,000, more preferably 600 to 50,000, even more preferably 700 to 20,000. This weight average molecular weight is a value as measured by gel permeation chromatography (GPC) in terms of standard polystyrene.

In one aspect of the present invention, the weakly acidic organic compound is (1) preferably at least one selected from the group consisting of compounds having a phenolic hydroxyl group, polymers having a phenolic hydroxyl group, and sulfonamide compounds, (2) more preferably at least one selected from the group consisting of phenol, 3-nitrophenol, 3-chlorophenol, 4-fluorophenol, 4-iodophenol, 4-chlorophenol, 2,4-dichlorophenol, 3,5-dichlorophenol, 2,6-dichlorophenol, 3,4-dichlorophenol, 4,4-dihydroxydiphenyl ether, guaiacol, 2-bromophenol, 3-bromophenol, 4-bromophenol, 2-chlorophenol, 4-nitrophenol, 3-methoxyphenol, 5-methoxyresorcinol, 2,6-dimethoxyphenol, 2,6-dimethylphenol, 3,5-dimethylphenol, 3,5-dimethoxyphenol, 4-phenoxyphenol, 4-methoxyphenol, catechol, xylenol, pyrogallol, cresol, phloroglucinol, resorcinol, hydroquinone, 1,6-dihydroxynaphthalene, 2,7-dihydroxynaphthalene, 2,6-dihydroxynaphthalene, 1,4-dihydroxynaphthalene, 1,5-dihydroxynaphthalene, 1,7-dihydroxynaphthalene, 1,3-dihydroxynaphthalene, 2,3-dihydroxynaphthalene, 1,2-dihydroxynaphthalene, 1,2,4-trihydroxybenzene, hexahydroxybenzene, 1-naphthol, 2-naphthol, leucoquinizarine, 2-cyanophenol, 2-ethylphenol, 3',4'-dihydroxyacetophenone, 4'-hydroxyacetophenone, 4'-hydroxypropiophenone, 4'-dihydroxybutyrophenone, 2',4',6'-trihydroxyacetophenone, 4-hydroxybenzyl alcohol, 4-hexylphenol, 2-hydroxybenzenetrifluoride, 2-hydroxybenzenethiol, 2-isopropylphenol, 2-(methylthio)phenol, 4-amylphenol, salicylaldehyde, trimethylhydroquinone, 3-ethoxyphenol, 2-ethoxyphenol, tetrachlorohydroquinone, 4-bromoresorcinol, 4,6-diacetylresorcinol, 2',4',6'-trihydroxypropiophenone, methyl salicylate, 2,4'-dihydroxybenzophenone, 2',3',4'-trihydroxyacetophenone, 5-acetylsalicylamide, 4-hydroxymandelonitrile, 4-(chloroacetyl)catechol, benzyl 2,4-dihydroxyphenyl ketone, 2,4,6-trihydroxy-2-phenylacetophenone, novolac-type phenol resins, resol-type phenol resins, methanesulfonamide, N-methylmethanesulfonamide, trifluoromethanesulfonamide, cyclopropanesulfonamide, pentafluoroethanesulfonamide, benzenesulfonamide, N-phenylmethanesulfonamide, 1,3-benzenedisulfonamide, 4-fluorobenzenesulfonamide, 3-fluorobenzenesulfonamide, and benzyl sulfonamide, (3)even more preferably at least one selected from the group consisting of phenol, phloroglucinol, resorcinol, catechol, pyrogallol, novolac-type phenol resins, and N-phenylmethanesulfonamide.

In another aspect of the present invention, the weakly acidic organic compound is (1) preferably a compound having a phenolic hydroxyl group and/or a polymer having a phenolic hydroxyl group, (2) more preferably at least one selected from the group consisting of phenol, 3-nitrophenol, 3-chlorophenol, 4-fluorophenol, 4-iodophenol, 4-chlorophenol, 2,4-dichlorophenol, 3,5-dichlorophenol, 2,6-dichlorophenol, 3,4-dichlorophenol, 4,4-dihydroxydiphenyl ether, guaiacol, 2-bromophenol, 3-bromophenol, 4-bromophenol, 2-chlorophenol, 4-nitrophenol, 3-methoxyphenol, 5-methoxyresorcinol, 2,6-dimethoxyphenol, 2,6-dimethylphenol, 3,5-dimethylphenol, 3,5-dimethoxyphenol, 4-phenoxyphenol, 4-methoxyphenol, catechol, xylenol, pyrogallol, cresol, phloroglucinol, resorcinol, hydroquinone, 1,6-dihydroxynaphthalene, 2,7-dihydroxynaphthalene, 2,6-dihydroxynaphthalene, 1,4-dihydroxynaphthalene, 1,5-dihydroxynaphthalene, 1,7-dihydroxynaphthalene, 1,3-dihydroxynaphthalene, 2,3-dihydroxynaphthalene, 1,2-dihydroxynaphthalene, 1,2,4-trihydroxybenzene, hexahydroxybenzene, 1-naphthol, 2-naphthol, leucoquinizarine, 2-cyanophenol, 2-ethylphenol, 3',4'-dihydroxyacetophenone, 4'-hydroxyacetophenone, 4'-hydroxypropiophenone, 4'-dihydroxybutyrophenone, 2',4',6'-trihydroxyacetophenone, 4-hydroxybenzyl alcohol, 4-hexylphenol, 2-hydroxybenzenetrifluoride, 2-hydroxybenzenethiol, 2-isopropylphenol, 2-(methylthio)phenol, 4-amylphenol, salicylaldehyde, trimethylhydroquinone, 3-ethoxyphenol, 2-ethoxyphenol, tetrachlorohydroquinone, 4-bromoresorcinol, 4,6-diacetylresorcinol, 2',4',6'-trihydroxypropiophenone,

methyl salicylate, 2,4'-dihydroxybenzophenone, 2',3',4'-trihydroxyacetophenone, 5-acetylsalicylamide, 4-hydroxymandelonitrile, 4-(chloroacetyl)catechol, benzyl 2,4-dihydroxyphenyl ketone, 2,4,6-trihydroxy-2-phenylacetophenone, a novolac-type phenol resin, and a resol-type phenol resin, (3) further more preferably at least one selected from the group consisting of phenol, phloroglucinol, resorcinol, catechol, pyrogallol, and novolac-type phenol resins, (4) even more preferably at least one selected from the group consisting of phloroglucinol, resorcinol, pyrogallol, and novolac-type phenol resins, (5) particularly preferably at least one selected from the group consisting of phloroglucinol and/or resorcinol.

In the composition of the present invention, the weakly acidic organic compound and the basic compound may form a salt. In other words, the composition of the present invention may contain a salt of the weakly acidic organic compound and the basic compound. Examples of the basic compound to form a salt with the weakly acidic organic compound include alkali metal carbonates, alkali metal hydrogen carbonates, alkali metal hydroxides, and amine compounds. The description of these is as follows.

The basic compound to form a salt with the weakly acidic organic compound is (i) preferably at least one selected from the group consisting of alkali metal carbonates, alkali metal hydrogen carbonates, alkali metal hydroxides, and amine compounds, (ii) more preferably an alkali metal hydroxide, (iii) even more preferably at least one selected from the group consisting of potassium hydroxide, rubidium hydroxide, and cesium hydroxide, (iv) particularly preferably cesium hydroxide.

The content of the weakly acidic organic compound is 30 to 1,000 parts by weight, preferably 50 to 200 parts by weight, per 100 parts by weight of the hydrophilic resin, from the viewpoint of improving the acidic gas permeation performance. When this content is less than 30 parts by weight, the effect of improving the acidic gas permeation performance is insufficient. When this content is more than 1,000 parts by weight, the water retention of a membrane constituted by the composition of the present invention (in the present specification, may be abbreviated as the "composition membrane") may be reduced. When the weakly acidic organic compound is present in the form of a salt in the composition, "the content of the weakly acidic organic compound" in the present invention means the content in terms of the weakly acidic organic compound forming no salt.

(Hydrophilic resin)

The hydrophilic resin retains water to allow the basic compound to exert an acidic gas separation function. The hydrophilic resin preferably has a higher water absorbing property from the viewpoint of acidic gas separation performance.

As the hydrophilic resin, conventionally known ones can be used. The hydrophilic resin may be a homopolymer or may be a copolymer. Only one hydrophilic resin may be used, or two or more hydrophilic resins may be used.

Examples of the hydrophilic resin include polyvinyl alcohol, poly(meth)acrylic acid, polyvinyl alcohol-polyacrylic acid copolymer, polyethylene oxide, polypropylene oxide, polyethylene oxide-polypropylene oxide copolymer, water-soluble cellulose, starch, alginic acid, chitin, polyvinyl sulfonic acid, polystyrene sulfonic acid, polyhydroxy methacrylate, polyvinylpyrrolidone, polyvinyl butyral, poly(N-vinylpyrrolidone), and poly(N-vinylacetamide).

The hydrophilic resin may be in the form of a salt. In the composition of the present invention, the hydrophilic resin together with a basic compound mentioned below may form a salt. A salt is formed in advance from the hydrophilic resin and the basic compound, and this salt may be added to the composition of the present invention.

The hydrophilic resin is preferably a polymer including a constitutional unit (in the present specification, may be abbreviated as the "constitutional unit (1)") represented by the formula (1):

[Formula 2]

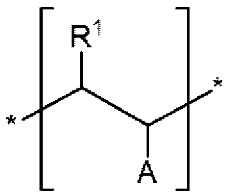

(1)

wherein A represents - $(CH_2)_n$-COOH, -$(CH_2)_n$-$SO_3H$, -X-$SO_3H$, or -OH, n represents an integer of 0 to 9, X represents a phenylene group, $R^1$ represents a hydrogen atom or a $C_{1-10}$ alkyl group, and * represents a bond position.

Only one polymer including the constitutional unit (1) may be used, or two or more polymers including the constitutional unit (1) may be used. The polymer may be a homopolymer or may be a copolymer. In other words, the polymer may include only one type of constitutional unit (1), may include two or more types of constitutional unit (1), or may include other constitutional unit different from the constitutional unit (1).

n is preferably 0. Here, "n is 0" means that "-$(CH_2)_n$-" in the above formula is absent.

A is preferably -COOH, $-SO_3H$, $-X-SO_3H$, or -OH. Here, $-X-SO_3H$ means a phenyl group having a sulfo group as the substituent. $-X-SO_3H$ is preferably a 4-sulfophenyl group. A is more preferably -COOH or -OH.

$R^1$ is preferably a hydrogen atom from the viewpoint of water solubility and water retention.

The content of the constitutional unit (1) in the polymer including the constitutional unit (1) is preferably 10% by weight or more. The polymer including the constitutional unit (1) may be a homopolymer constituted by one type of constitutional unit (1) or may be a copolymer constituted by two or more types of constitutional unit (1).

Examples of the polymer including the constitutional unit (1) include polyvinyl alcohol (PVA), polyacrylic acid (PAA), polyvinyl alcohol-polyacrylic acid (PVA-PAA) copolymer, polyvinyl sulfonic acid, and polystyrene sulfonic acid. Here, polyacrylic acid means a polymer having a constitutional unit derived from acrylic acid and may include other constitutional unit. The same applies to other polymers. The constitutional unit derived from vinyl alcohol in polyvinyl alcohol (PVA) and polyvinyl alcohol-polyacrylic acid (PVA-PAA) copolymer means a unit having a structure formed by reaction of the double bond of vinyl alcohol, and this may not be formed from vinyl alcohol itself. The "constitutional unit derived from vinyl alcohol" is generally formed by polymerizing vinyl acetate and then hydrolyzing the constitutional unit derived from vinyl acetate. The same applies to other constitutional units.

The polymer including the constitutional unit (1) is preferably a polyacrylic acid (PAA) and/or polyvinyl alcohol-polyacrylic acid (PVA-PAA) copolymer, more preferably polyacrylic acid (PAA). PAA and PVA-PAA copolymer have a property in that the water absorption ability is high. Only one of PAA and PVA-PAA copolymer may be used, or two or more of these may be used.

The polymer including the constitutional unit (1) together with the basic compound may form a salt. In other words, the polymer including the constitutional unit (1) may be in the form of a salt. Examples of the salt of the polymer including the constitutional unit (1) include alkali metal salts such as sodium salts and potassium salts, ammonium salts, and amine salts.

Specific examples of PAA include "AQUPAANA(registered trademark)" manufactured by Sumitomo Seika Chemicals Company, Limited, "AQUPEC(registered trademark)" manufactured by Sumitomo Seika Chemicals Company, Limited, "AQUALIC(registered trademark)" manufactured by NIPPON SHOKUBAI CO., LTD., and "San-Fresh (registered trademark)" manufactured by Sanyo Chemical Industries, Ltd.

The hydrophilic resin is (i) preferably a polymer including the constitutional unit (1), (ii) more preferably at least one selected from the group consisting of polyacrylic acid (PAA), polyvinyl alcohol-polyacrylic acid (PVA-PAA) copolymer, polyvinyl sulfonic acid, and polystyrene sulfonic acid, (iii) even more preferably at least one selected from the group consisting of polyacrylic acid (PAA) and/or polyvinyl alcohol-polyacrylic acid (PVA-PAA) copolymer, (iv) particularly preferably polyacrylic acid (PAA).

An example of the index of the size of the hydrophilic resin is the viscosity of its 0.2% by weight aqueous solution (when the hydrophilic resin is a crosslinked polymer and strictly does not dissolve in water, the viscosity of a 0.2% by weight suspension). The viscosity of the 0.2% by weight aqueous solution of the hydrophilic resin (the viscosity of the 0.2% by weight dispersion) is preferably 300 to 70,000 mPa·s, more preferably 400 to 50,000 mPa·s, even more preferably 500 to 40,000 mPa·s. This viscosity is a value as measured by a B-type rotary viscometer under conditions of pH 7, a temperature of 25°C, and a rotational speed of 20 rpm.

(Basic compound)

The basic compound is preferably one that exhibits water solubility and reversibly reacts with acidic gases. Examples of such basic compounds include alkali metal carbonates, alkali metal hydrogen carbonates, alkali metal hydroxides, and amine compounds.

Examples of the alkali metal carbonate include sodium carbonate, lithium carbonate, potassium carbonate, rubidium carbonate, and cesium carbonate. Only one alkali metal carbonate may be used, or two or more alkali metal carbonates may be used. The alkali metal carbonate is preferably at least one selected from the group consisting of potassium carbonate, rubidium carbonate, and cesium carbonate, more preferably cesium carbonate.

Examples of the alkali metal hydrogen carbonate include sodium hydrogen carbonate, lithium hydrogen carbonate, potassium hydrogen carbonate, rubidium hydrogen carbonate, and cesium hydrogen carbonate. Only one alkali metal hydrogen carbonate may be used, or two or more alkali metal hydrogen carbonates may be used. The alkali metal hydrogen carbonate may be preferably at least one selected from the group consisting of potassium hydrogen carbonate, rubidium hydrogen carbonate, and cesium hydrogen carbonate, more preferably cesium hydrogen carbonate.

Examples of the alkali metal hydroxide include sodium hydroxide, lithium hydroxide, potassium hydroxide, rubidium hydroxide, and cesium hydroxide. Only one alkali metal hydroxide may be used, or two or more alkali metal hydroxides may be used. The alkali metal hydroxide is preferably at least one selected from the group consisting of potassium hydroxide, rubidium hydroxide, and cesium hydroxide, more preferably cesium hydroxide.

Examples of the amine compound include aliphatic amines, cyclic amines, guanidines, amidines, and alkanolamines. Only one of these or two or more of these may be used.

Examples of the aliphatic amine include monomethylamine, N,N-dimethylamine, N,N,N-trimethylamine, monoethylamine, N,N-diethylamine, N,N,N-triethylamine, monopropylamine (including all the isomers), N,N-dipropylamine (including all the isomers), N,N,N-tripropylamine (including all the isomers), monobutylamine (including all the isomers), N,N-dibutylamine (including all the isomers), N,N,N-tributylamine (including all the isomers), N-ethyl-N-methylamine, N-methyl-N-propylamine, N-butyl-N-methylamine, and N-ethyl-N-propylamine. Only one of these may be used, or two or more of these may be used. The carbon number of the aliphatic amine is preferably 1 to 12, more preferably 1 to 10, even more preferably 1 to 7, from the viewpoint of diffusivity in the acidic gas separation membrane formed from the composition of the present invention.

The cyclic amine may be either a saturated cyclic amine or an unsaturated cyclic amine. The cyclic amine may include one or more hetero atoms such as a nitrogen atom, an oxygen atom, or a sulfur atom in the ring. The cyclic amine may include one or more carbonyl carbons in the ring. The cyclic amine may be monocyclic or polycyclic (e.g., bicyclic to tricyclic).

Examples of the cyclic amine include saturated or unsaturated 3 to 7-membered monocyclic amines having one nitrogen atom such as aziridine, azetidine, pyrrolidine, pyrroline, dihydropyridine, piperidine, dihydroazepine, and perhydroazepine; saturated or unsaturated 3 to 7-membered monocyclic amines having two nitrogen atoms such as piperazine and homopiperazine; saturated or unsaturated 3 to 7-membered monocyclic amines having 1 to 4 hetero atoms selected from oxygen atoms and sulfur atoms, in addition to nitrogen atoms, such as morpholine, thiomorpholine, and homothiomorpholine; saturated or unsaturated bicyclic to tricyclic amines such as isoindoline and tetrahydroquinoline; and saturated or unsaturated 5 to 12-membered spiro or crosslinked amines such as quinuclidine, 2,8-diazabicyclo[4.3.0]nonane, 3-azabicyclo[3.1.0]hexane, 2,8-diazaspiro[4.4]nonane, and 7-azabicyclo[2.2.1]heptane. Only one of these may be used, or two or more of these may be used.

Examples of the guanidine include 1,1,3,3-tetramethyl guanidine, 1,5,7-triazabicyclo[4.4.0]dec-5-ene, and 7-methyl-1,5,7-triazabicyclo[4.4.0]dec-5-ene. Only one of these may be used, or two or more of these may be used.

Examples of the amidine include acetamidine, 1,5-diazabicyclo[4.3.0]non-5-ene, and 1,8-diazabicyclo[5.4.0]undec-7-ene. Only one of these may be used, or two or more of these may be used.

Examples of the alkanol amine include monoethanolamine, diethanolamine, triethanolamine, N,N-dimethylethanolamine, N,N-diethylethanolamine, aminoethylethanolamine, N-methyl-N,N-diethanolamine, N,N-dibutylethanolamine, N-methylethanolamine, and 3-amino-1-propanol. Only one of these may be used, or two or more of these may be used.

The carbon number of the amine compound preferably 1 to 20. When the carbon number of the amine compound has 20 or less, the amine compound has high diffusivity in the acidic gas separation membrane formed from the composition of the present invention, and the acidic gas permeation performance is improved. From the similar viewpoint, the carbon number of the amine compound has more preferably 1 to 10, more preferably 1 to 7.

The basic compound is (i) preferably at least one selected from the group consisting of alkali metal carbonates, alkali metal hydrogen carbonates, alkali metal hydroxides, and amine compounds, (ii) more preferably a alkali metal hydroxide, (iii) even more preferably at least one selected from the group consisting of potassium hydroxide, rubidium hydroxide, and cesium hydroxide, (iv) particularly preferably cesium hydroxide.

The content of the basic compound is preferably 10 to 3,000 parts by weight, more preferably 50 to 2,000 parts by weight, even more preferably 200 to 1,000 parts by weight, particularly preferably 300 to 500 parts by weight, per 100 parts by weight of the hydrophilic resin, from the viewpoint of acidic gas permeation performance and membrane formability.

In composition of the present invention, the basic compound together with the weakly acidic organic compound and/or hydrophilic resin may form a salt. In other words, the basic compound may be present in the form of a salt in the composition of the present invention. The above-mentioned content of the basic compound means the content in terms of the basic compound not forming the salt.

From the viewpoint of acidic gas permeation performance, the composition of the present invention may contain a basic compound not forming the salt (i.e., free). The content of the free basic compound is preferably 0 to 200 parts by weight, more preferably 0 to 150 parts by weight, even more preferably 0 to 100 parts by weight, per 100 parts by weight of the basic compound forming the salt.

(Other components)

The composition of the present invention may contain other components different from the above-mentioned weakly acidic organic compound, hydrophilic resin, and basic compound as long as the effect of the present invention (improvement in the acidic gas permeation performance) is not compromised.

The composition of the present invention preferably contains water. The composition containing water may be a composition having fluidity (e.g., a coating liquid) or may be a composition having no fluidity (e.g., a composition membrane in the acidic gas separation membrane).

When water is used, the content of water in a composition having fluidity (e.g., a coating liquid) is preferably 20 to 99% by weight, more preferably 30 to 97% by weight, even more preferably 40 to 95% by weight, from the viewpoint of the coating property. When water is used, the content of water in a composition having no fluidity (e.g., a composition membrane in the acidic gas separation membrane) is preferably 1 to 70% by weight, more preferably 5 to 60% by weight, even more preferably 10 to 50% by weight, from the viewpoint of the mechanical strength of the composition membrane. The content of water means the amount of water based on the entire composition.

The composition of the present invention may contain a surfactant. Examples of the surfactant include polyoxyethylene alkyl phenyl ethers, polyoxyethylene alkyl ethers, fluorine-type surfactants, and silicone-type surfactants. Only one surfactant may be used, or two or more surfactants may be used.

When the surfactant is used, the content of the surfactant in the composition (i.e., the amount of the surfactant based on the entire composition) is preferably 0.001 to 5% by weight, more preferably 0.005 to 3% by weight, even more preferably 0.010 to 3% by weight, from the viewpoint of the coating property and acidic gas permeation performance.

The composition of the present invention may contain an organic solvent. Only one organic solvent may be used, or two or more organic solvents may be used. Examples of the organic solvent include protic polar organic solvents such as methanol, ethanol, 1-propanol, and 2-propanol; and aprotic polar organic solvents such as acetone, methyl ethyl ketone, methyl isobutyl ketone, tetrahydrofuran, dioxane, N-methylpyrrolidone, N,N-dimethylacetamide, and N,N-dimethylformamide.

(Acidic gas separation membrane)

The composition of the present invention is preferably used for production of an acidic gas separation membrane. The present invention also provides an acidic gas separation membrane including the above-mentioned composition. The acidic gas is preferably at least one selected from the group consisting of carbon dioxide, hydrogen sulfide, carbonyl sulfide, sulfur oxides ($SO_x$), nitrogen oxides ($NO_x$) , and halogenated hydrogen (e.g., hydrogen chloride), more preferably at least one selected from the group consisting of carbon dioxide, hydrogen sulfide, carbonyl sulfide, sulfur oxides ($SO_x$), and nitrogen oxides ($NO_x$), even more preferably at least one selected from the group consisting of carbon dioxide, hydrogen sulfide, and sulfur oxides ($SO_x$), particularly preferably carbon dioxide and/or hydrogen sulfide, most preferably carbon dioxide.

The acidic gas separation membrane of the present invention may be one including composition membrane (i.e., a membrane constituted by the composition of the present invention) or may be one including the composition membrane and another member (e.g., a porous membrane). The thickness of the composition membrane in the acidic gas separation membrane of the present invention is preferably 0.1 to 600 $\mu$m, more preferably 0.5 to 400 $\mu$m, even more preferably 1 to 200 $\mu$m.

The acidic gas separation membrane of the present invention preferably includes a porous membrane. The porous membrane may be a single layer membrane or may be a laminated membrane. The acidic gas separation membrane of the present invention may be one having a porous membrane or may be one having two or more porous membranes. The two or more porous membranes may be the same or different from each other.

Example of materials for the porous membrane include resins. Only one resin may be used, or two or more resins may be used. Examples of the resin include polyolefin-type resins such as polyethylene (PE) and polypropylene (PP); fluorine-containing resins such as polytetrafluoroethylene (PTFE), polyvinyl fluoride (PVF), and polyvinylidene fluoride (PVDF); polyester resins such as polyethylene terephthalate (PET) and polyethylene naphthalate; polystyrene (PS), polyethersulfone (PES), polyphenylene sulfide (PPS), polysulfone (PSF), polyacrylonitrile (PAN), polyphenylene oxide (PPO), polyamide (PA), polyimide (PI), polyetherimide (PEI), polyether ether ketone (PEEK), aramid, and polycarbonate. Among these, in respect of water repellency, polypropylene (PP) and fluorine-containing resin are preferred, and polytetrafluoroethylene (PTFE) is more preferred.

Examples of materials for the porous membrane include inorganic materials such as metal, glass, and ceramics, in addition to the above resins. The porous membrane may include both the resin and the inorganic material.

The thickness of the porous membrane is not particularly limited, and is preferably 10 to 3,000 $\mu$m, more preferably 15 to 500 $\mu$m, even more preferably 20 to 200 $\mu$m, from the viewpoint of mechanical strength.

The average pore diameter of the porous membrane is preferably 0.0005 $\mu$m or more, more preferably 0.001 $\mu$m or more, even more preferably 0.005 $\mu$m or more, preferably 10 $\mu$m or less, more preferably 5 $\mu$m or less, even more preferably 1 $\mu$m or less. This average pore diameter is a value as measured by mercury porosimetry.

The porosity of porous membrane is preferably 5 to 99% by volume, more preferably 30 to 90% by volume. This porosity is a value as measured by mercury porosimetry.

The porous membrane is preferably hydrophobic. Use of a support layer having a hydrophobic porous membrane prevents moisture in the composition membrane from infiltrating the pores of the porous membrane, and a decrease in the acidic gas separation membrane performance is prevented.

As an index of hydrophobicity is, for example, the contact angle of water at a temperature of 25°C can be

mentioned. The contact angle of water at a temperature of 25°C of the porous membrane is preferably 90 degrees or more, more preferably 95 degrees or more, even more preferably 100 degrees or more. The contact angle of water can be measured by a contact angle meter (e.g., a dynamic contact angle meter 1100 DAT: FIBRO System AB).

The porous membrane preferably has heat resistance. In the present specification, "Heat resistance" means that visually observable curling due to heat shrink or heat melting does not occur in a porous membrane even after the porous membrane is stored for 2 hours at the maximum temperature in the process conditions.

Figure 1 is a cross-sectional view of an exemplary acidic gas separation membrane of the present invention. An acidic gas separation membrane 10 shown in Figure 1 has a configuration in which a composition membrane 15 is present between a first porous membrane 11 and a second porous membrane 12. Preferred is an acidic gas separation membrane of such a configuration. The first porous membrane 11 and the second porous membrane 12 each may be a single layer membrane or may be a laminated membrane. The first porous membrane 11 and the second porous membrane 12 may be the same or different from each other. Description of the material, thickness, properties (average pore diameter) and the like for the first porous membrane 11 and the second porous membrane 12 is the same as the description of the above-mentioned porous membrane.

In the acidic gas separation membrane 10, a porous body may be further laminated on a surface each of the first porous membrane 11 and the second porous membrane 12, which surface is not in contact with the composition membrane 15, in order to improve the strength. Examples of the porous body include non-woven fabrics or woven fabrics constituted by a resin and/or an inorganic material exemplified as the material for the porous membrane.

The acidic gas separation membrane of the present invention preferably has a composition membrane and a first porous membrane. In the aspect, the acidic gas separation membrane of the present invention more preferably further has a second porous membrane. In the aspect, more preferably, the composition membrane is present between the first porous membrane and the second porous membrane.

(Method for producing acidic gas separation membrane)

An acidic gas separation membrane can be produced from the composition of the present invention using a known method. Hereinafter, an exemplary method for producing an acidic gas separation membrane will be described. First, a first porous membrane is coated with a coating liquid containing a weakly acidic organic compound, a hydrophilic resin, a basic compound, and water (an aspect of the composition of the present invention) to form a coating liquid membrane. The coating liquid can be prepared by mixing a weakly acidic organic compound, a hydrophilic resin, a basic compound, and water. In order to prevent uneven coating, the coating liquid may contain a surfactant. The coating liquid may contain an organic solvent as required. Description for the surfactant and the organic solvent is as mentioned above.

The method for coating with the coating liquid is not particularly limited, and a known method can be appropriately adopted in accordance with the purpose. Examples of the coating method include a spin coating method, a bar coating method, a die coating method, a blade coating method, an air knife coating method, a gravure coating method, a roll coating method, a spray coating method, a dip coating method, a comma roll coating method, a kiss coating method, screen printing, and inkjet printing.

The membrane thickness of the undried coating liquid used for coating is preferably 10 to 1,500 $\mu$m, more preferably 50 to 1000 $\mu$m, even more preferably 100 to 500 $\mu$m. Adjustment of the membrane thickness of the coating liquid can be controlled with the amount of the coating liquid used for coating, the coating speed of the coating liquid, and the concentration of the coating liquid and the like.

On the coating liquid membrane formed on the first porous membrane, a second porous membrane may be laminated as required.

Subsequently, an acidic gas separation membrane (i.e., an acidic gas separation membrane comprising the membrane of a composition having no fluidity and the first porous membrane) can be produced by removing water or the organic solvent used as required from the coating liquid membrane. The method for removing water and the like is not particularly limited, and a conventionally known method can be used. As the method for removing water and the like, preferred is a method of drying the membrane of the coating liquid using a dryer. Examples of the dryer include a ventilation dryer.

The drying temperature and time may be appropriately determined in consideration of type of the porous membrane and the like. The drying temperature is 60 to 150°C, for example. The drying time is 3 to 30 minutes, for example.

(Acidic gas separation apparatus)

The present invention also provides an acidic gas separation apparatus including the above-mentioned acidic gas separation membrane. The acidic gas separation apparatus of the present invention preferably includes an acidic gas separation membrane element and/or acidic gas separation membrane module including the above-mentioned acidic gas separation membrane. Examples of the element type include spiral types, hollow fiber types, pleated types,

tubular types, and plate and frame types. An acidic gas separation membrane module is a module that houses one or more acidic gas separation membrane element in a housing, and usually has a source gas supply port, a non-permeated gas exhaust port, a permeated gas exhaust port, and, if necessary, a sweep gas supply port.

Examples

Hereinafter, the present invention will be concretely described with reference to examples and comparative examples, but the present invention is not intended to be limited thereby.

(Components and the like)

Components, a porous membrane, and a defoaming apparatus used in examples and comparative examples mentioned below are as follows.

Hydrophilic resin 1: polyacrylic acid (manufactured by Sumitomo Seika Chemicals Company, Limited, trade name: AQUPEC HV-501E, viscosity of a 0.2% by weight aqueous solution: 6, 400 mPa·s)
Hydrophilic resin 2: polyacrylic acid (manufactured by Sumitomo Seika Chemicals Company, Limited, trade name: AQUPAANA AP-40F, viscosity of a 0.2% by weight aqueous solution: 800 mPa·s)
Basic compound aqueous solution: 50% by weight cesium hydroxide aqueous solution (manufactured by Sigma-Aldrich Co. LLC.)
10% by weight surfactant aqueous solution (manufactured by AGC Seimi Chemical Co., Ltd., trade name: Surflon S-242)
Weakly acidic organic compound 1: resorcinol (manufactured by Tokyo Chemical Industry Co., Ltd., acid dissociation constant in a 25°C aqueous solution 1: 9.3, acid dissociation constant 2: 9.8)
Weakly acidic organic compound 2: phloroglucinol (manufactured by Tokyo Chemical Industry Co., Ltd., acid dissociation constant in a 25°C aqueous solution 1: 8.0, acid dissociation constant 2: 9.2, acid dissociation constant 3: 14.0)
Weakly acidic organic compound 3: phenol (manufactured by Tokyo Chemical Industry Co., Ltd., acid dissociation constant in a 25°C aqueous solution: 9.9)
Weakly acidic organic compound 4: N-phenylmethanesulfonamide (manufactured by Tokyo Chemical Industry Co., Ltd., acid dissociation constant in a 25°C aqueous solution: 12.9)
Weakly acidic organic compound 5: pyrogallol (manufactured by Tokyo Chemical Industry Co., Ltd., acid dissociation constant in a 25°C aqueous solution 1: 9.0, acid dissociation constant 2: 11.6)
Weakly acidic organic compound 6: catechol (manufactured by Tokyo Chemical Industry Co., Ltd., acid dissociation constant in a 25°C aqueous solution 1: 9.1, acid dissociation constant 2: 12.1)
Aqueous solution of weakly acidic organic compound 7: 75.3% by weight novolac-type phenol resin aqueous solution (manufactured by Sumitomo Chemical Advanced Technologies, trade name: PENACOLITE R-2170, acid dissociation constant in a 25°C aqueous solution of the resin: 9.4, weight average molecular weight: 870, molecular weight distribution 1.9)
Hydrophobic PTFE porous membrane (manufactured by Sumitomo Electric Fine Polymer, Inc., trade name: POREFLON HP-010-50, thickness: 50 μm, average pore diameter: 0.1 μm, porosity: 73% by volume, contact angle of water at a temperature of 25°C: 113 degrees)
Defoaming apparatus (manufactured by THINKY CORPORATION, trade name: rotation and revolution mixer Awatori Rentaro ARE-310)

(Example 1)

Water (170.8 parts by weight), the hydrophilic resin 1 (4.0 parts by weight), and the hydrophilic resin 2 (0.8 parts by weight) were mixed to obtain a dispersion. To this dispersion, the aqueous solution of the 50% by weight basic compound (37.8 parts by weight), the weakly acidic organic compound 1 (3.5 parts by weight), and the 10% by weight surfactant aqueous solution (1.2 parts by weight) were added as an acidic gas carrier and mixed to obtain a coating liquid (water content in the coating liquid: 78.3% by weight). The obtained coating liquid was defoamed using the defoaming apparatus.

The hydrophobic PTFE porous membrane used as a first porous membrane was coated with the defoamed coating liquid at a temperature of 20 to 25°C. Subsequently, on the coating liquid membrane formed on the first porous membrane, a hydrophobic PTFE porous membrane same as that for the first porous membrane was laminated as a second porous membrane to obtain a laminate. This laminate was placed in a dryer and dried at a temperature of 100°C for approximately 15 minutes to form a composition membrane (thickness: 26 μm, water content in the composition

membrane: 27.8% by weight), and an acidic gas separation membrane was obtained.

(Example 2)

A composition membrane (thickness: 28 μm, water content in the composition membrane: 26.9% by weight) was formed to obtain an acidic gas separation membrane in the same manner as in Example 1 except that the amount of water used was changed from 170.8 parts by weight to 171.7 parts by weight and the weakly acidic organic compound 2 (2.7 parts by weight) was used in place of the weakly acidic organic compound 1 (3.5 parts by weight).

(Example 3)

A composition membrane (thickness: 29 μm, water content in the composition membrane: 23.1% by weight) was formed to obtain an acidic gas separation membrane in the same manner as in Example 1 except that the amount of water used was changed from 170.8 parts by weight to 168.3 parts by weight and the weakly acidic organic compound 3 (6.0 parts by weight) was used in place of the weakly acidic organic compound 1 (3.5 parts by weight).

(Example 4)

A composition membrane (thickness: 36 μm, water content in the composition membrane: 27.5% by weight) was formed to obtain an acidic gas separation membrane in the same manner as in Example 1 except that the amount of water used was changed from 170.8 parts by weight to 168.3 parts by weight and the weakly acidic organic compound 4 (11.3 parts by weight) was used in place of the weakly acidic organic compound 1 (3.5 parts by weight).

(Example 5)

A composition membrane (thickness: 32 μm, water content in the composition membrane: 23.6% by weight) was formed to obtain an acidic gas separation membrane in the same manner as in Example 1 except that the amount of water used was changed from 170.8 parts by weight to 168.3 parts by weight and the weakly acidic organic compound 5 (2.9 parts by weight) was used in place of the weakly acidic organic compound 1 (3.5 parts by weight).

(Example 6)

A composition membrane (thickness: 32 μm, water content in the composition membrane: 25.3% by weight) was formed to obtain an acidic gas separation membrane in the same manner as in Example 1 except that the amount of water used was changed from 170.8 parts by weight to 168.3 parts by weight and the weakly acidic organic compound 6 (3.6 parts by weight) was used in place of the weakly acidic organic compound 1 (3.5 parts by weight).

(Comparative Example 1)

A composition membrane (thickness: 28 μm, water content in the composition membrane: 25.8% by weight) was formed to obtain an acidic gas separation membrane in the same manner as in Example 1 except that the amount of water used was changed from 170.8 parts by weight to 174.3 parts by weight and the weakly acidic organic compound 1 (3.5 parts by weight) was not used.

(Performance evaluation)

The $CO_2$ permeance of the acidic gas separation membrane of each of Examples 1 to 6 and Comparative Example 1 was measured using an acidic gas separation apparatus comprising an acidic gas separation membrane cell 61, as shown in Figure 1. Specifically, the acidic gas separation membrane produced was cut into a flat membrane of an appropriate size. This flat membrane was fixed between the supply side 62 and the permeation side 63 of the stainless acidic gas separation membrane cell 61. A source gas ($CO_2$: 13.6% by volume, He: 67.7% by volume, $H_2O$: 18.7% by volume) was supplied at a flow rate of 340 NmL/min to the supply side 62 of the acidic gas separation membrane cell 61, and a sweep gas (Ar: 88.0% by volume, $H_2O$: 12.0% by volume) was supplied at a flow rate of 32 NmL/min to the permeation side 63 of the acidic gas separation membrane cell 61. Here, water was pumped by a metering pumps 68 and 70 and evaporated by heating such that the mix ratio of $H_2O$ was adjusted to the ratio described above. The pressure for the supply side 62 was adjusted to 125 kPaA (absolute pressure) by a back pressure controller 65 provided on the downstream side of a cold trap 64 provided midway along the exhaust path for the non-permeated gas. A back pressure controller 69 is provided also between a cold trap 66 and a gas chromatograph 67 to thereby the pressure of

the permeation side 63 to the atmospheric pressure. In order to maintain the temperature of each of the acidic gas separation membrane cell 61, the source gas, and the sweep gas constant, the piping for supplying the gases to the acidic gas separation membrane cell 61 and the acidic gas separation membrane cell 61 itself were placed in a thermostatic chamber set to the predetermined temperature. While the temperature of each of the acidic gas separation membrane cell 61, the source gas, and the sweep gas was set to 93°C, this performance evaluation was conducted.

When the steady state was reached after operation of the acidic gas separation apparatus was started, the gas flow after removal of the water vapor in the sweep gas exhausted from the permeation side 63 by means of the cold trap 66 was analyzed with the gas chromatograph 67 to calculate the $CO_2$ permeance (mol/($m^2$ × sec × kPa)).

The $CO_2$ permeance obtained was used to calculate the relative value of the $CO_2$ permeance with respect to the $CO_2$ permeance of Comparative Example 1 set to 1 by the following expression:

Relative value of $CO_2$ permeance = $CO_2$ permeance of any of Examples 1 to 6 (mol/($m^2$ × sec × kPa))/$CO_2$ permeance of Comparative Example 1 (mol/($m^2$ × sec × kPa)).

The results are shown in Table 1.

[Table 1]

| | Hydrophilic resin 1 | Hydrophilic resin 2 | Basic compound (solids) | | Weakly acidic organic compound | | Relative value of $CO_2$ permeance |
|---|---|---|---|---|---|---|---|
| | Amount used (parts) | Amount used (parts) | Amount used (parts) | Content (parts) | Amount used (parts) | Content (parts) | |
| Example 1 | 4.0 | 0.8 | 18.9 | 393.8 | 3.5 | 72.9 | 2.28 |
| Example 2 | 4.0 | 0.8 | 18.9 | 393.8 | 2.7 | 56.3 | 2.57 |
| Example 3 | 4.0 | 0.8 | 18.9 | 393.8 | 6.0 | 125 | 1.14 |
| Example 4 | 4.0 | 0.8 | 18.9 | 393.8 | 11.3 | 234.8 | 2.60 |
| Example 5 | 4.0 | 0.8 | 18.9 | 393.8 | 2.9 | 60.6 | 2.27 |
| Example 6 | 4.0 | 0.8 | 18.9 | 393.8 | 3.6 | 75.8 | 1.21 |
| Comparative Example 1 | 4.0 | 0.8 | 18.9 | 393.8 | - | - | 1 |

(Note)
(1) Parts = parts by weight
(2) The content of the component represents the amount (parts) of the component per 100 parts of the hydrophilic resin.
(3) As the weakly acidic organic compound, the weakly acidic organic compound 1 was used in Example 1, the weakly acidic organic compound 2 was used in Example 2, the weakly acidic organic compound 3 was used in Example 3, the weakly acidic organic compound 4 was used in Example 4, the weakly acidic organic compound 5 was used in Example 5, and weakly acidic organic compound 6 was used in Example 6.

As shown in Table 1, use of the weakly acidic organic compound can improve the acidic gas permeation performance of the acidic gas separation membrane ($CO_2$ permeance).

(Example 7)

Water (192.8 parts by weight) and the hydrophilic resin 1 (2.4 parts by weight) were mixed to obtain a dispersion. To this dispersion, an aqueous solution of the basic compound (18.6 parts by weight), an aqueous solution of the weakly acidic organic compound 7 (3.2 parts by weight, 2.4 parts by weight as solids), and a 10% by weight surfactant aqueous solution (1.2 parts by weight) were added as an acidic gas carrier and mixed to obtain a coating liquid. The obtained

coating liquid was defoamed using the defoaming apparatus. The obtained coating liquid was used to form a composition membrane (thickness: 28 μm, water content in the composition membrane: 26.2% by weight), and an acidic gas separation membrane was obtained, in the same manner as in Example 1.

(Comparative Example 2)

A composition membrane (thickness: 27 μm, water content in the composition membrane: 24.2% by weight) was formed to obtain an acidic gas separation membrane in the same manner as in Example 7 except that the amount of water used was changed from 192.8 parts by weight to 168.3 parts by weight, the aqueous solution of the weakly acidic organic compound 7 (3.2 parts by weight, 2.4 parts by weight as solids) was not used, and the amount of the hydrophilic resin 1 used was changed from 2.4 parts by weight to 4.8 parts by weight. In Comparative Example 2, the amount of the basic compound used was made equivalent to the amount of the basic compound used in Example 7. Additionally, the amount of the hydrophilic resin 1 used in Comparative Example 2 was made equivalent to the amount of the resin used in Example 7 (i.e., the hydrophilic resin 1 and the weakly acidic organic compound 7 (novolac-type phenol resin)).

(Performance evaluation)

The $CO_2$ permeance of the acidic gas separation membrane of each of Example 7 and Comparative Example 2 was measured in the same manner as described above. The $CO_2$ permeance obtained was used to calculate the relative value of the $CO_2$ permeance with respect to the $CO_2$ permeance of Comparative Example 2 set to 1 by the following expression:

$$\text{Relative value of } CO_2 \text{ permeance} = CO_2 \text{ permeance of Example 7 } (mol/(m^2 \times sec \times kPa))/CO_2 \text{ permeance of Comparative Example 2 } (mol/(m^2 \times sec \times kPa)).$$

The results are shown in Table 2.

[Table 2]

| | Hydrophilic resin 1 | Basic compound (solids) | | Weakly acidic organic compound (solids) | | Relative value of $CO_2$ permeance |
|---|---|---|---|---|---|---|
| | Amount used (parts) | Amount used (parts) | Content (parts) | Amount used (parts) | Content (parts) | |
| Example 7 | 2.4 | 9.3 | 387.5 | 2.4 | 100 | 2.41 |
| Comparative Example 2 | 4.8 | 9.3 | 193.8 | - | - | 1 |

(1) Parts = parts by weight
(2) The content of the component represents the amount (parts) of the component per 100 parts of the hydrophilic resin.
(3) As the weakly acidic organic compound, the weakly acidic organic compound 7 was used in Example 7.

As shown in Table 2, use of the weakly acidic organic compound can improve the acidic gas permeation performance of the acidic gas separation membrane ($CO_2$ permeance).

Industrial Applicability

The composition of the present invention is useful for producing an acidic gas separation membrane.

The present application is based on Japanese Patent Application No. 2018-189410 filed in Japan, the content of which is entirely incorporated herein.

Reference Signs List

10 acidic gas separation membrane
11 first porous membrane
12 second porous membrane
15 composition membrane
61 acidic gas separation membrane cell
62 supply side
63 permeation side
64 cold trap
65 back pressure controller
66 cold trap
67 gas chromatograph
68 metering pump
69 back pressure controller
70 metering pump

## Claims

1. A composition comprising an organic compound having an acid dissociation constant in a 25°C aqueous solution of 5.0 to 15.0, a hydrophilic resin, and a basic compound, wherein
a content of the organic compound is 30 to 1,000 parts by weight per 100 parts by weight of the hydrophilic resin.

2. The composition according to claim 1, wherein
the hydrophilic resin is a polymer comprising a constitutional unit represented by the formula (1):

[Formula 1]

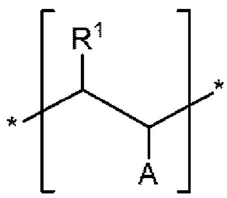

(1)

wherein A represents - $(CH_2)_n$-COOH, - $(CH_2)_n$-$SO_3H$, -X-$SO_3H$, or -OH, n represents an integer of 0 to 9, X represents a phenylene group, $R^1$ represents a hydrogen atom or a $C_{1-10}$ alkyl group, and * represents a bond position.

3. The composition according to claim 1 or 2, wherein the basic compound is at least one selected from the group consisting of an alkali metal carbonate, an alkali metal hydrogen carbonate, an alkali metal hydroxide, and an amine compound.

4. The composition according to any one of claims 1 to 3, wherein the organic compound is at least one selected from the group consisting of a compound having a phenolic hydroxyl group, a polymer having a phenolic hydroxyl group, and a sulfonamide compound.

5. The composition according to any one of claims 1 to 3, wherein the organic compound is a compound having a phenolic hydroxyl group and/or a polymer having a phenolic hydroxyl group.

6. The composition according to claim 4 or 5, wherein the compound having a phenolic hydroxyl group is at least one selected from the group consisting of phenol, 3-nitrophenol, 3-chlorophenol, 4-fluorophenol, 4-iodophenol, 4-chlorophenol, 2,4-dichlorophenol, 3,5-dichlorophenol, 2,6-dichlorophenol, 3,4-dichlorophenol, 4,4-dihydroxydiphenyl ether, guaiacol, 2-bromophenol, 3-bromophenol, 4-bromophenol, 2-chlorophenol, 4-nitrophenol, 3-methoxyphenol, 5-methoxyresorcinol, 2,6-dimethoxyphenol, 2,6-dimethylphenol, 3,5-dimethylphenol, 3,5-dimethoxyphenol, 4-phenoxyphenol, 4-methoxyphenol, catechol, xylenol, pyrogallol, cresol, phloroglucinol, resorcinol, hydroquinone, 1,6-dihydroxynaphthalene, 2,7-dihydroxynaphthalene, 2,6-dihydroxynaphthalene, 1,4-dihydroxynaphthalene, 1,5-dihydroxynaphthalene, 1,7-dihydroxynaphthalene, 1,3-dihydroxynaphthalene, 2,3-dihydroxynaphthalene, 1,2-dihydroxynaphthalene, 1,2,4-trihydroxybenzene, hexahydroxybenzene, 1-naphthol, 2-naphthol, leucoquinizarine, 2-cyanophenol, 2-ethylphenol, 3',4'-dihydroxyacetophenone, 4'-hydroxyacetophenone, 4'-hydroxypropiophenone, 4'-dihydroxybutyrophenone, 2',4',6'-trihydroxyacetophenone, 4-hydroxybenzyl alcohol, 4-hexylphenol, 2-hydroxybenzenetrifluoride, 2-hydroxybenzenethiol, 2-isopropylphenol, 2-(methylthio)phenol, 4-amylphenol, salicylaldehyde, trimethylhydroquinone, 3-ethoxyphenol, 2-ethoxyphenol, tetrachlorohydroquinone, 4-bromoresorcinol, 4,6-diacetylresorcinol, 2',4',6'-trihydroxypropiophenone, methyl salicylate, 2,4'-dihydroxybenzophenone, 2',3',4'-trihydroxyacetophenone, 5-acetylsalicylamide, 4-hydroxymandelonitrile, 4-(chloroacetyl)catechol, benzyl 2,4-dihydroxyphenyl ketone, and 2,4,6-trihydroxy-2-phenylacetophenone.

**7.** The composition according to any one of claims 4 to 6, wherein the polymer having a phenolic hydroxyl group is a novolac-type phenol resin and/or a resol-type phenol resin.

**8.** The composition according to any one of claims 1 to 7, wherein the organic compound and the basic compound form a salt.

**9.** The composition according to any one of claims 1 to 8, wherein the hydrophilic resin and the basic compound form a salt.

**10.** The composition according to any one of claims 1 to 9 to be used for producing an acidic gas separation membrane.

**11.** An acidic gas separation membrane comprising a membrane comprising the composition according to any one of claims 1 to 9 and a first porous membrane.

**12.** The acidic gas separation membrane according to claim 11, further comprising a second porous membrane.

**13.** The acidic gas separation membrane according to claim 12, wherein the membrane is present between the first porous membrane and the second porous membrane.

**14.** An acidic gas separation apparatus comprising the acidic gas separation membrane according to any one of claims 11 to 13.

**15.** A method for producing an acidic gas separation membrane, the method comprising coating a first porous membrane with a coating liquid to form a membrane of the coating liquid and removing water from the obtained membrane of the coating liquid, wherein
the coating liquid comprises an organic compound having an acid dissociation constant in a 25°C aqueous solution of 5.0 to 15.0, a hydrophilic resin, a basic compound, and water, and a content of the organic compound is 30 to 1,000 parts by weight per 100 parts by weight of the hydrophilic resin.

Figure 1

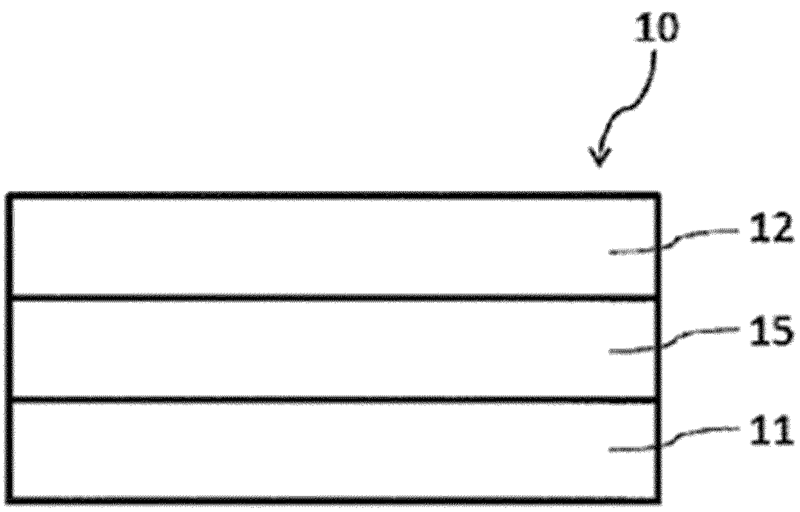

Figure 2

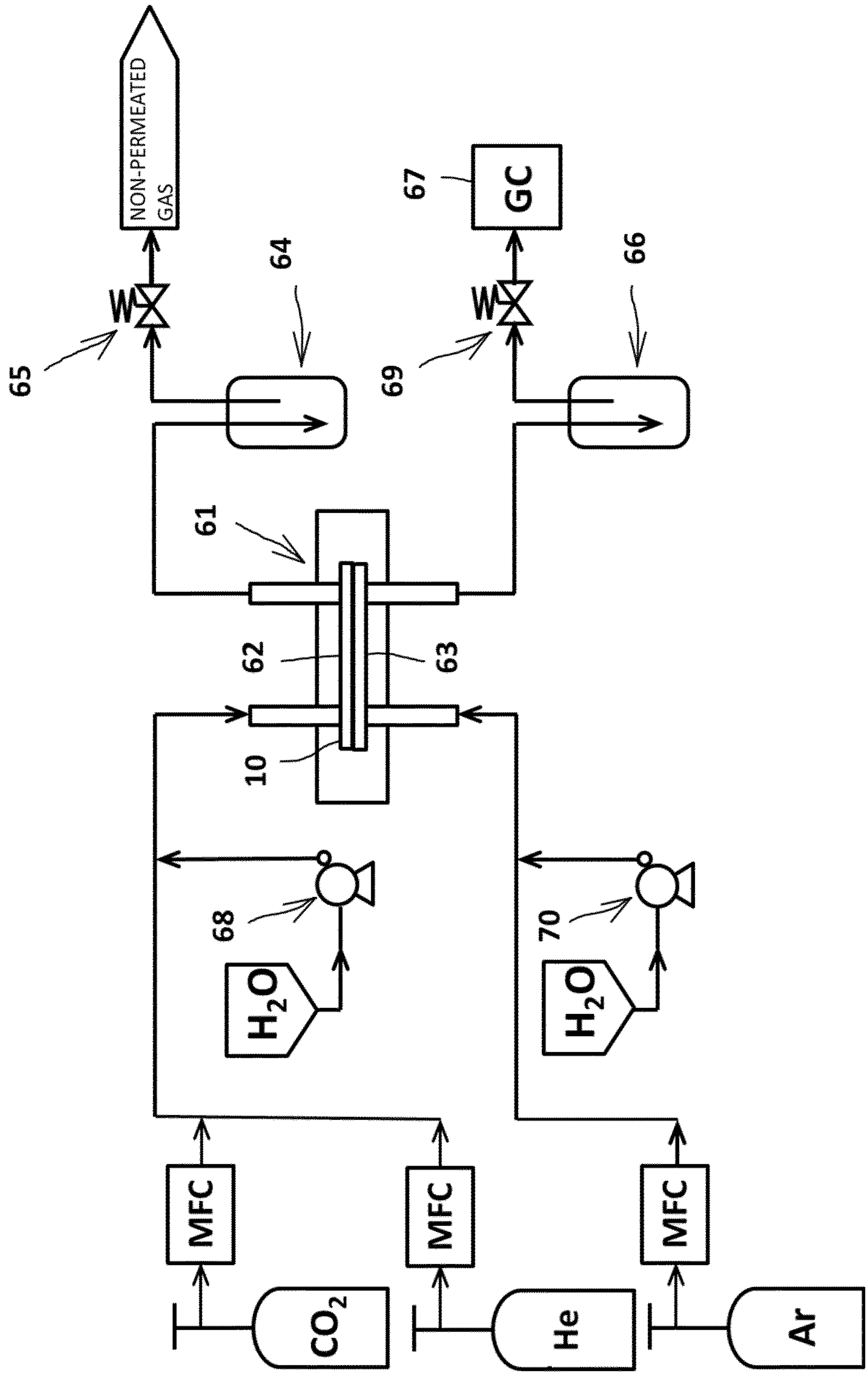
NON-PERMEATED GAS
GC
67
64
66
65
69
61
62
63
10
68
70
$H_2O$
$H_2O$
MFC
MFC
MFC
$CO_2$
He
Ar

## INTERNATIONAL SEARCH REPORT

International application No. PCT/JP2019/038864

A. CLASSIFICATION OF SUBJECT MATTER
Int.Cl. [see extra sheet]

According to International Patent Classification (IPC) or to both national classification and IPC

B. FIELDS SEARCHED

Minimum documentation searched (classification system followed by classification symbols)
Int.Cl. B01D61/00-71/82, B01D53/22, C01D1/04, C08K3/18, C08K5/13, C08L33/02, C08L61/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2017/163786 A1 (MOLECULAR GATE MEMBRANE MODULE TECHNOLOGY RESEARCH ASSOCIATION) 28 September 2017 & JP 2017-170355 A | 1-15 |
| A | WO 2012/096055 A1 (FUJIFILM CORPORATION) 19 July 2012 & CN 103282108 A & EP 2664373 A1 & JP 2013-049042 A & US 2013/0284022 A1 | 1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>31.10.2019 | Date of mailing of the international search report<br>12.11.2019 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.
PCT/JP2019/038864

C (Continuation). DOCUMENTS CONSIDERED TO BE RELEVANT

| Category* | Citation of document, with indication, where appropriate, of the relevant passages | Relevant to claim No. |
|---|---|---|
| A | WO 2016/024523 A1 (SUMITOMO CHEMICAL CO., LTD.) 18 February 2016 & CN 106573207 A & EP 3181214 A1 & KR 10-2017-0040333 A & TW 201609239 A & US 2017/0232398 A1 | 1-15 |

Form PCT/ISA/210 (continuation of second sheet) (January 2015)

**INTERNATIONAL SEARCH REPORT**

International application No.
PCT/JP2019/038864

(Continuation of Box No. A)

CLASSIFICATION OF SUBJECT MATTER
B01D69/00(2006.01)i, B01D53/22(2006.01)i, B01D71/02(2006.01)i, B01D71/06(2006.01)i, B01D71/28(2006.01)i, B01D71/40(2006.01)i, B01D71/72(2006.01)i, B01D71/82(2006.01)i, C01D1/04(2006.01)i, C08K3/18(2006.01)i, C08K5/13(2006.01)i, C08L33/02(2006.01)i, C08L61/04(2006.01)i

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009093666 A
- WO 2011099587 A
- JP 2018189410 A

### Non-patent literature cited in the description

- Shinpan Bunseki Kagaku Jikken. 219-237